# FASCICULE DE BREVET EUROPEEN

(11) **EP 2 199 699 B1**
(45) Date de publication et mention de la délivrance du brevet: **07.12.2016**
(21) Numéro de dépôt: 09015375.0
(22) Date de dépôt: 11.12.2009
(51) Int. Cl.: F24F 12/00, F25B 30/06, B61D 27/00, F24F 11/00, B60H 1/00, F25B 13/00, F25D 11/00

(54) **Installation de climatisation embarquée équipée d`un dispositif thermodynamique de récupération de la chaleur**
Einbauklimagerät mit einem thermodynamischen Rekuperator
On-vehicle air-conditioning installaton with a thermodynamical device for heat recovery

(30) Priorité: 12.12.2008 FR 0806978
(43) Date de publication de la demande: 23.06.2010
(73) Titulaire: Mobile Comfort Holding, 01700 Neyron (FR)
(72) Inventeur: Moreau, Christian, 01700 Neyron (FR)
(74) Mandataire: Schmidt, Martin Peter

(56) Documents cités:
- EP-A- 1 870 643
- WO-A-03/095250
- WO-A1-89/12269
- GB-A- 2 242 515
- JP-A- 2005 132 167
- US-A- 4 071 080
- US-A- 5 257 736
- US-A- 5 550 752
- US-A- 5 953 926
- US-A- 6 038 879
- US-A1- 2004 140 081
- US-A1- 2005 262 853

## Description

### Domaine de l'invention

La présente invention concerne une installation de climatisation ou de chauffage d'air embarquée, notamment pour véhicules terrestres, bateaux, ou autres installations mobiles, et plus spécialement pour véhicules ferroviaires. L'installation de la présente invention comporte en outre un dispositif de récupération de la chaleur.

### Etat de la technique

Les installations de climatisation ou de chauffage d'air pour véhicules ferroviaires comportent en général un dispositif thermodynamique composé d'un compresseur, d'un condenseur, d'un détendeur et d'un évaporateur, de ventilateurs, qui est utilisé pour la climatisation, et des résistances électriques utilisées pour le chauffage. L'air insufflé dans le wagon par des ventilateurs est un mélange d'air neuf arrivant de l'extérieur et d'air recyclé du wagon. Une partie de l'air extrait du wagon par le système de ventilation est rejeté directement à l'extérieur et l'énergie calorifique qu'il possède est perdue. Afin d'économiser de l'énergie, il serait intéressant de pouvoir récupérer l'énergie calorifique de l'air extrait du wagon avant de le rejeter à l'extérieur du wagon. On connaît des dispositifs de récupération de la chaleur sur les systèmes de ventilation et de climatisation des bâtiments. Le brevet US 4,061,186 de Ake LJUNG décrit un système thermodynamique récupérant la chaleur de l'air extrait de ventilation d'un bâtiment pour chauffer ou refroidir l'air entrant. Le système permet de chauffer et refroidir l'air de ventilation circulant dans des conduits d'air entrant et des conduits d'air extrait, le système comprenant un échangeur de chaleur dans chacun des conduits. Les échangeurs de chaleur sont reliés entre eux par un circuit de fluide frigorigène incluant une machine de réfrigération, ayant un évaporateur connecté à un des échangeurs de chaleur et un condenseur connecté à l'autre échangeur de chaleur, qui permettent, respectivement, lorsque la machine est en fonctionnement, de refroidir et chauffer le fluide les traversant, et des vannes connectées à l'évaporateur et au condenseur. D'après ce qui est décrit dans ce document, l'air extrait constitue la seule source de chaleur du système.

La demande de brevet n° WO 01/42719 de Ove NJAA décrit un appareil de climatisation de bâtiment avec récupération de chaleur sur l'air extrait. L'appareil comprend deux conduits passant dans un élément de récupération de la chaleur, et des échangeurs de chaleur sur l'air entrant et l'air sortant reliés respectivement au condenseur et à l'évaporateur de l'appareil de climatisation. Le récupérateur de chaleur est un récupérateur statique placé dans le circuit après l'échangeur de chaleur relié à l'évaporateur (en mode chauffage, le document ne décrit pas le mode refroidissement). L' échangeur de chaleur relié à l'évaporateur prend la chaleur sur l'air extrait et la transfère à l'évaporateur. Le récupérateur de chaleur prend également, mais à la suite, de la chaleur sur l'air extrait et la transfère directement à l'air entrant.

Le brevet US 5,806,582 décrit un procédé et un dispositif pour contrôler le transfert de chaleur dans des appareils de ventilation ou de climatisation dans lequel la chaleur contenue dans l'air extrait est récupérée dans l'air entrant au moyen d'un circuit de transfert de la chaleur ayant une circulation de fluide. Une énergie de chauffage ou de refroidissement additionnelle est fournie au circuit de transfert de la chaleur si besoin. Le procédé et le dispositif décrits ici permettent de mesurer les températures de fluide à différents points du circuit et ainsi de fournir l'énergie additionnelle uniquement lorsqu'elle est nécessaire. Le présent document ne décrit pas de dispositif de récupération de la chaleur thermodynamique.

Le document US 6,038,879 concerne une unité combinée de climatisation et d'échange d'air. Cette unité comprend quatre « chambres » : une pour l'air extrait, une pour l'air repris, une pour l'air entrant et une pour l'air neuf. Un premier ventilateur souffle l'air de la chambre d'air extrait vers l'extérieur et un second ventilateur souffle l'air entrant vers l'espace à conditionner. Une plaque mobile permet la mise en communication des chambres entre elles, pour en particulier le mélange d'air neuf et d'air repris de ventilation. Le dispositif décrit dans le document US 6,038,879 ne permet pas la récupération de chaleur.

Le document EP 1 870 643 concerne un système de chauffage pour un immeuble, comportant au moins deux pompes à chaleur. Le système possède ainsi une souplesse de fonctionnement, une des deux pompes à chaleur pouvant être coupée lorsque la puissance demandée est faible, par exemple lorsque la température extérieure n'est pas très basse. Le système décrit dans le document EP 1 870 643 ne permet pas la récupération de chaleur.

Le document US 5,257,736 concerne un appareil de ventilation auto-régulé. L'appareil comprend un échangeur de chaleur pour prendre la chaleur de l'air extrait de l'intérieur d'un local, et transférer cette chaleur à l'air extérieur admis à l'intérieur du local. Des ventilateurs font circuler l'air dans deux passages de l'échangeur de chaleur, et une trappe motorisée ouvre ou ferme le passage d'air extérieur. Le moteur de la trappe est actionné automatiquement en fonction de la valeur de certains paramètres tels que la concentration de polluants dans l'air intérieur, l'humidité de l'air intérieur, la température de l'air extérieur, la différence de pression entre l'intérieur et l'extérieur. Le document US 5,257,736 ne décrit pas d'utilisation de dispositif thermodynamique.

Le document EP 0 716 402 concerne un procédé de détection de présence et un dispositif de mise en oeuvre du procédé. La détection se fait à l'aide d'un capteur infrarouge capable de détecter la présence d'êtres humains et de connaître le taux d'occupation d'un espace par des êtres humains. Le document EP 0 716 402 ne décrit pas une installation de chauffage/climatisation.

Des dispositifs statiques utilisant des échangeurs de chaleur à plaques ont également été utilisés pour récupérer de la chaleur sur l'air extrait des wagons dans des installations employées dans des véhicules ferroviaires. Ces dispositifs présentent cependant comme inconvénients des pertes de charges sur l'air élevées, un encrassement des plaques des échangeurs de chaleur, de possibles prises en glace des plaques des échangeurs, dues au fait que de l'air chaud et humide extrait de l'intérieur arrive sur des plaques à des températures négatives. En pratique ces échangeurs statiques ne sont donc pas utilisables pour des températures extérieures inférieures à -5°C. D'autre part les récupérateurs de chaleur statiques doivent être court-circuités dans certains cas, en particulier en hiver pour éviter le givrage des plaques (le récupérateur est dans ce cas remplacé par des résistances d'appoint), ou l'été dans certains systèmes où le récupérateur est employé uniquement en mode chauffage.

D'autre part, le document US 5,953,926 concerne un système de chauffage, refroidissement et déshumidification avec récupération de la chaleur. Ce système comporte deux dispositifs thermodynamiques juxtaposés, tous deux aptes à échanger de la chaleur avec deux flux d'air différents. Dans ce système, la récupération de la chaleur est optionnelle et se fait grâce à des échangeurs de chaleur supplémentaires, non reliés aux dispositifs thermodynamiques, et permettant uniquement de transférer la chaleur du milieu plus chaud (par exemple l'air extrait) au milieu plus froid (par exemple l'air neuf). Les deux systèmes thermodynamique ne fonctionnent pas en synergie l'un avec l'autre.

La présente invention se propose de résoudre les problèmes mentionnés ci-dessus, grâce à une installation embarquée pour la climatisation ou le chauffage d'air dans des installations mobiles, notamment pour véhicules ferroviaires, qui permet de récupérer de la chaleur ou du froid sur l'air extrait d'un espace grâce à un dispositif thermodynamique secondaire, servant à améliorer les performances d'un dispositif de chauffage/climatisation principal.

### Objet de l'invention

Un but de l'invention est d'augmenter la quantité de chaleur récupérée sur l'air extrait de ventilation dans les installations embarquées de chauffage/climatisation. Ce but est atteint par un dispositif thermodynamique réversible de récupération de la chaleur qui utilise comme source l'air extrait de ventilation et utilise la chaleur produite de manière thermodynamique pour préchauffer (en mode chauffage) ou prérefroidir (en mode climatisation) l'air neuf, et obtenir ainsi un rendement de chauffage ou climatisation amélioré.

Un premier objet de l'invention est une installation embarquée pour le chauffage et la climatisation d'un espace d'une installation mobile, notamment l'intérieur d'un véhicule terrestre, de préférence ferroviaire, pourvue d'un dispositif principal de chauffage et de climatisation comprenant un compresseur, un détendeur, un premier échangeur de chaleur sur l'air extérieur, un second échangeur de chaleur et/ou une résistance électrique, et/ou une batterie à eau ou à huile placée sur le circuit de refroidissement d'un moteur thermique ou électrique, un premier ventilateur, un second ventilateur pour insuffler l'air chauffé ou refroidi dans ledit espace à chauffer ou refroidir. Ladite installation comprend en outre un dispositif thermodynamique réversible de récupération de la chaleur de l'air extrait dudit espace, ledit dispositif comprenant un compresseur, un détendeur, un premier échangeur de chaleur sur l'air neuf, un second échangeur de chaleur sur l'air extrait dudit espace, un ventilateur pour rejeter à l'extérieur l'air extrait après son passage dans le second échangeur de chaleur, et ledit dispositif thermodynamique réversible de récupération de la chaleur permettant grâce à la chaleur en mode chauffage ou au froid en mode refroidissement extrait(e) de l'air extrait dudit espace, de préchauffer (en mode chauffage) ou pré-refroidir (en mode refroidissement) l'air neuf et d'envoyer sur le premier échangeur de chaleur et/ou la résistance et/ou la batterie à eau ou à huile du dispositif principal, un mélange d'air repris de ventilation et d'air neuf préchauffé ou pré-refroidi.

Un autre but de l'invention est d'obtenir une récupération thermodynamique de la chaleur de manière efficace et économique. Ce but est atteint grâce à une installation de chauffage/climatisation telle que décrite ci-dessus et comportant en outre des moyens permettant de connaître approximativement le taux d'occupation de l'installation mobile, par mesure du taux de CO2 dans l'air de l'espace ou par un comptage du nombre de personnes présentes, et par une régulation de l'insufflation et évenutellement de la fréquence des compresseurs, en fonction de ce taux d'occupation.

Ce but est également atteint par une installation de chauffage/climatisation telle que décrite ci-dessus et comportant en outre une sonde de température sur l'air neuf, une sonde de température sur l'air repris, et un moyen de commande du compresseur du dispositif thermodynamique de récupération de la chaleur, ledit moyen de commande étant apte à arrêter le compresseur lorsque l'air neuf est plus froid en mode climatisation, ou plus chaud en mode chauffage que l'air repris.

Un autre objet de l'invention est un procédé de chauffage et de climatisation d'un espace d'une installation mobile, notamment l'intérieur d'un véhicule terrestre, de préférence ferroviaire, au moyen d'une installation embarquée pour le chauffage et la climatisation d'air selon telle que ci-dessus, comprenant les étapes consistant à :
a) Alimenter en énergie, de préférence électrique, le compresseur du dispositif de récupération de la chaleur pour faire fonctionner le dispositif thermodynamique de récupération de la chaleur, si nécessaire, alimenter en énergie, de préférence électrique, le compresseur du dispositif principal pour faire fonctionner le dispositif principal,
b) Aspirer l'air neuf à chauffer ou refroidir au moyen du second ventilateur du dispositif principal,
c) Faire passer l'air neuf sur le premier échangeur de chaleur du dispositif thermodynamique de récupération de la chaleur pour obtenir un air préchauffé ou prérefroidi, ledit échangeur de chaleur étant porté à une température appropriée par l'action du dispositif thermodynamique de récupération de la chaleur,
d) Mélanger l'air préchauffé (en mode chauffage) ou prérefroidi (en mode climatisation) avec l'air repris de l'espace,
e) Faire passer le mélange d'air obtenu à l'étape précédente sur la résistance et/ou le premier échangeur de chaleur du dispositif principal et/ou la batterie à eau pour obtenir de l'air chauffé (en mode chauffage) ou refroidi (en mode climatisation),
f) Insuffler l'air chauffé ou refroidi dans l'espace,
g) Extraire une partie de l'air de l'espace,
h) Faire passer une partie de l'air extrait sur le second échangeur de chaleur du dispositif de récupération de la chaleur pour utiliser ledit air extrait comme source du dispositif de récupération de la chaleur et obtenir de l'air réchauffé ou refroidi,
i) Rejeter à l'extérieur l'air réchauffé ou refroidi au moyen du ventilateur du dispositif de récupération de la chaleur,
j) En mode climatisation, ou en mode chauffage dans le cas d'un dispositif principal réversible :
   i. aspirer l'air extérieur au moyen du premier ventilateur du dispositif principal,
   ii. faire passer l'air extérieur sur le second échangeur du dispositif principal,
   iii. rejeter à l'extérieur l'air réchauffé ou refroidi.

### Description des figures

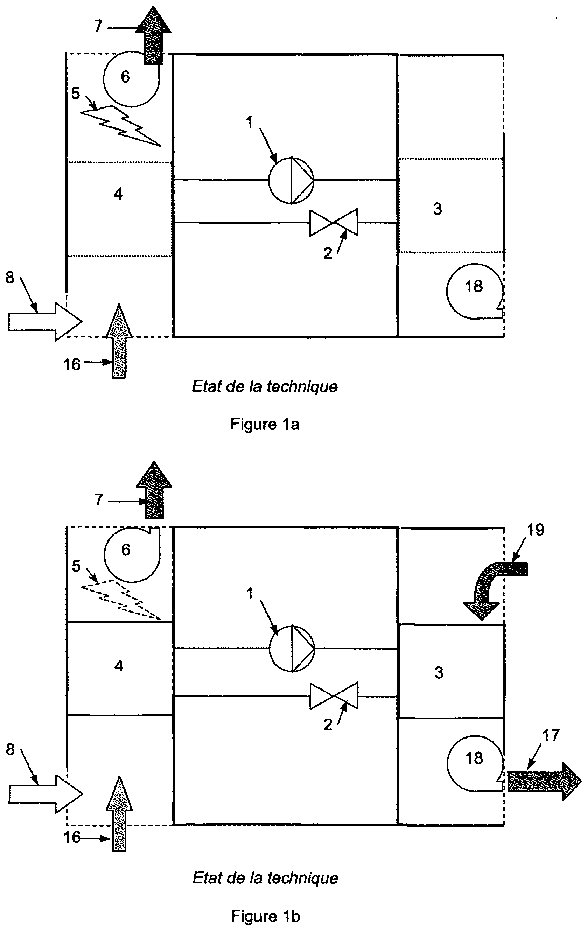

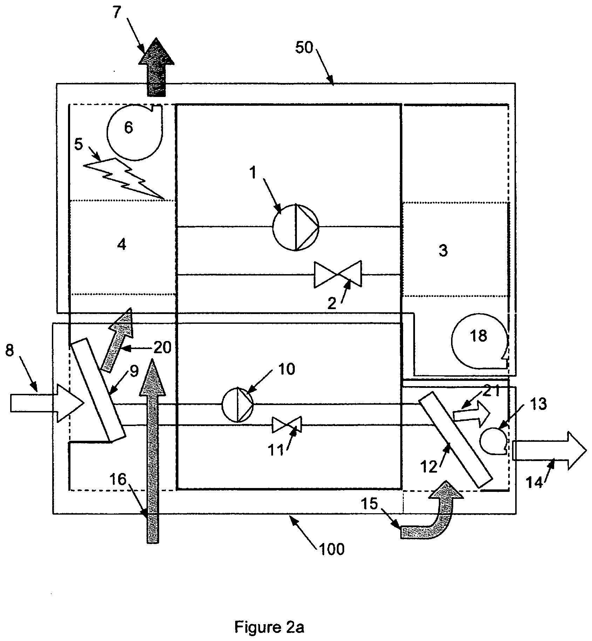

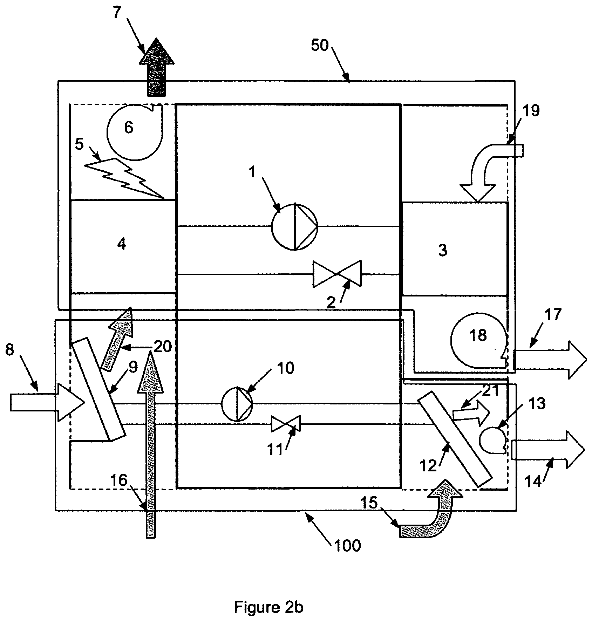

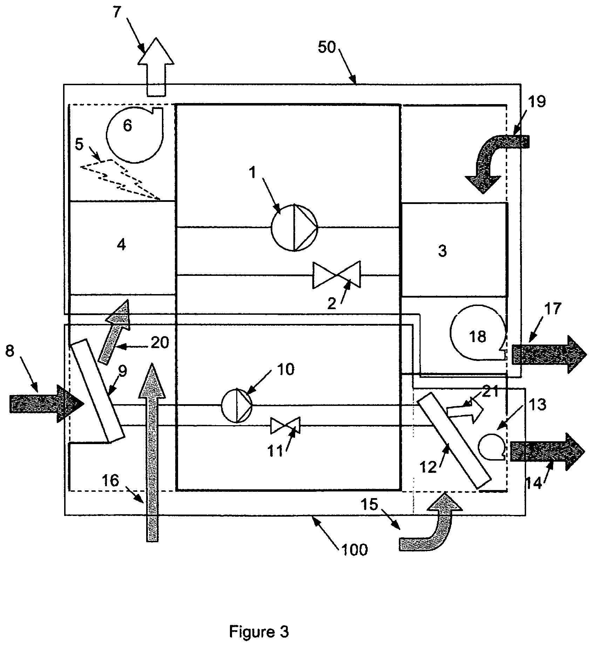

Les figures 2 et 3 se réfèrent à l'invention alors que la figure 1 se réfère à l'état de la technique.
Les figures 1a et 1b représentent un schéma de principe d'une installation de climatisation et chauffage d'air pour véhicule ferroviaire selon l'état de la technique, dans laquelle le dispositif de climatisation n'est pas réversible. La figure 1 a représente le mode chauffage, et la figure 1b le mode refroidissement.
La figure 2a représente un schéma de principe d'une installation de climatisation et chauffage embarquée selon l'invention, dans laquelle le dispositif de climatisation n'est pas réversible, en mode chauffage.
La figure 2b représente un schéma de principe d'une installation de climatisation et chauffage embarquée selon l'invention, dans laquelle le dispositif de climatisation est réversible, en mode chauffage.
La figure 3 représente un schéma de principe d'une installation de climatisation et chauffage embarquée selon l'invention, en mode refroidissement.

Sur l'ensemble des figures les éléments en pointillés sont des éléments non actifs dans le mode considéré (chaud ou froid). Les flèches blanches représentent l'air froid. Les flèches gris clair représentent l'air tiède, à savoir l'air repris de ventilation, et l'air préchauffé ou pré-refroidi 20 par l'échangeur 9 du dispositif thermodynamique de récupération de la chaleur de l'installation de la présente invention. Les flèches gris foncé représentent l'air chaud.

### Références des repères

- 1: Compresseur du système principal
- 2: Détendeur du système principal
- 3: Echangeur de chaleur sur l'air extérieur du dispositif principal
- 4: Echangeur de chaleur sur l'air neuf du dispositif principal
- 5: Résistance de chauffage du système principal
- 7: Air insufflé
- 8: Air neuf
- 9: Echangeur de chaleur du dispositif de récupération de la chaleur sur l'air neuf
- 10: Compresseur du dispositif de récupération de la chaleur
- 11: Détendeur du dispositif de récupération de la chaleur
- 12: Echangeur de chaleur du dispositif de récupération de la chaleur sur l'air extrait
- 6, 13, 18: Ventilateurs
- 14: Air rejeté par le dispositif de récupération de la chaleur
- 15: Air extrait de VMC
- 16: Air repris traité
- 17: Air extérieur rejeté par le système principal
- 19: Air extérieur
- 20: Air chauffé/refroidi par l'échangeur de chaleur du dispositif de récupération de la chaleur sur l'air neuf
- 21: Air chauffé/refroidi par l'échangeur de chaleur du dispositif de récupération de la chaleur sur l'air extrait
- 50: Dispositif principal de chauffage/climatisation
- 100: Dispositif thermodynamique secondaire de récupération de la chaleur

### Description de l'invention

La présente invention concerne une installation de chauffage et climatisation d'air embarquée, notamment pour véhicules, bateaux, ou autres installations mobiles, et plus spécialement pour un véhicule ferroviaire, dotée d'un dispositif de récupération de la chaleur contenue dans l'air extrait de l'espace à climatiser/chauffer, et notamment l'intérieur du véhicule ferroviaire, et destinée à fonctionner dans des conditions extrêmes de température et d'humidité.

La présence d'un tel dispositif de récupération de la chaleur permet en particulier de limiter la puissance de chauffage et de climatisation à mettre en oeuvre pour chauffer ou refroidir un espace d'une installation mobile, tel que l'intérieur d'un wagon d'un véhicule ferroviaire, à une température dite « de confort » pour les personnes occupant cet espace, typiquement entre 18 et 21 °C en saison froide et 24 à 28°C en saison chaude.

L'installation de chauffage et climatisation de la présente invention comporte un dispositif principal de chauffage/climatisation 50 similaire aux dispositifs existants pour le chauffage et la climatisation d'air des véhicules ferroviaires dans l'état de la technique. L'installation de chauffage et climatisation d'air embarquée selon la présente invention comporte en outre un dispositif thermodynamique secondaire 100 utilisant comme source la chaleur en mode chauffage et le froid en mode climatisation de l'air extrait du véhicule ferroviaire. Elle comporte également un dispositif de ventilation pour faire entrer de l'air neuf extérieur et l'insuffler dans l'espace à climatiser/chauffer, et pour extraire de l'espace à climatiser/chauffer l'air vicié.

Selon un mode de réalisation représenté par la figure 2a, le dispositif principal de chauffagelclimatisation 50 est composé d'une partie climatisation pouvant être utilisée en saison chaude pour le rafraîchissement de l'air d'un espace tel que l'intérieur d'un véhicule ferroviaire, et d'une partie chauffage par résistances électriques 5 pouvant être utilisées en saison froide pour le chauffage d'un espace tel que l'intérieur d'un véhicule ferroviaire. La partie climatisation comprend un compresseur 1, un condenseur 3, un détendeur 2 et un évaporateur 4.

Dans un autre mode de réalisation (non représenté), la chaleur nécessaire au chauffage en saison froide peut être la chaleur récupérée par le système de refroidissement d'un moteur thermique, par exemple le moteur thermique d'une locomotive, ou par un système de récupération de la chaleur d'un moteur électrique ou du convertisseur d'une motrice électrique. Cette source de chaleur peut être utilisée en complément ou en remplacement des résistances électriques 5. Dans ce mode de réalisation, l'espace peut être chauffé grâce à une batterie à eau ou à huile.

L'installation de chauffage et climatisation de la présente invention comporte en outre un ventilateur 6 pour insuffler l'air réchauffé ou refroidi dans un espace tel que l'intérieur d'un véhicule ferroviaire, un ventilateur 18 pour rejeter l'air extérieur utilisé comme source par le dispositif principal en mode climatisation , un ventilateur 13 pour rejeter l'air extrait 14 utilisé comme source par le dispositif thermodynamique de récupération de la chaleur.

Le dispositif de récupération de la chaleur 100 de l'installation de la présente invention est thermodynamique. Il s'agit d'une pompe à chaleur air/air sur la boucle d'air de ventilation. Le dispositif de récupération de la chaleur 100 de l'installation de la présente invention est composé d'un compresseur 10, d'un détendeur 11, d'un échangeur de chaleur sur l'air neuf 9 et d'un échangeur de chaleur sur l'air extrait 12. Ce dispositif de récupération de la chaleur doit être réversible, c'est-à-dire qu'il doit être capable de chauffer et de refroidir l'air neuf 8 en fonction des besoins.

Avantageusement, le dispositif de récupération de la chaleur 100 de la présente invention comprend en outre des organes de sécurité tels que des pressostats haute et basse pression dimensionnés par rapport au débit d'air extrait du réseau de ventilation et au débit d'air neuf (non représentés).

Le compresseur 10 du dispositif de récupération de la chaleur 100 de la présente invention est dimensionné par rapport au débit d'air neuf 8, il est en général de plus faible puissance que celui du dispositif principal. La source de chaleur du dispositif de récupération de la chaleur 100 de la présente invention est l'air extrait 15 de l'espace à chauffer/refroidir, la charge est l'air neuf 8 à apporter dans l'espace à chauffer/refroidir. Les échangeurs de chaleur 9 et 12 sont avantageusement réversibles, ils sont dimensionnés pour tenir compte des régimes d'air repris/extrait, et des conditions extérieures, et également des températures d'air neuf 8 qui peuvent varier de -20°C à 50°C selon les périodes de l'année et les zones géographiques.

Le dispositif thermodynamique de récupération de la chaleur de la présente invention est réversible grâce à une vanne 4 voies d'inversion de cycle (non représentée).

Le dispositif de récupération de la chaleur est utilisé pour produire de la chaleur destinée au chauffage en saison froide, et du froid destiné à la climatisation en saison chaude, en complément du dispositif principal de chauffage et climatisation.

Selon un autre mode de réalisation, le compresseur 10 du dispositif de récupération de la chaleur 100 est un compresseur de type inverter, c'est-à-dire un compresseur dont la vitesse de rotation varie en fonction de la puissance thermique nécessaire au fonctionnement du dispositif thermodynamique auquel il appartient. Il peut être avantageux d'utiliser un compresseur de ce type en particulier lorsque le débit d'air chauffé ou refroidi 7 insufflé dans l'espace à chauffer/refroidir est variable.

Le débit d'air neuf peut être variable par exemple lorsque l'espace à chauffer/refroidir est doté d'une sonde mesurant la concentration en dioxyde de carbone (CO₂) de l'air dudit espace de ladite installation mobile, et/ou d'un système de comptage de personnes.

Dans un mode de réalisation particulier, la concentration en dioxyde de carbone de l'air dudit espace de ladite installation mobile est mesurée par une sonde. La fréquence du ventilateur 6 d'insufflation d'air chauffé ou refroidi 7 est régulée en fonction de la concentration en dioxyde de carbone mesurée par la sonde. Par conséquent, le débit d'air neuf 8 est également régulé par la sonde mesurant la concentration en CO₂ de l'espace de l'installation mobile. La fréquence du compresseur 10 lorsqu'il est de type inverter peut également être régulée en fonction de la fréquence du ventilateur 6. En outre ou alternativement, la fréquence du compresseur 1 du dispositif principal, lorsqu'il est de type inverter, peut aussi être régulée en fonction de la fréquence du ventilateur 6.

Dans un autre mode de réalisation de l'installation de climatisation et de chauffage de la présente invention, ladite installation comporte un système de détermination du nombre des personnes présentes dans ledit espace de ladite installation mobile. Tout type de système de comptage connu peut convenir ; la détermination peut être approximative et n'a pas besoin d'être précise à l'unité près ; quel que soit le mode de détermination, nous appelons ici un tel système un « système de comptage ». Selon ce mode de réalisation de l'invention, la fréquence du ventilateur 6 d'insufflation d'air chauffé ou refroidi 7 est régulée en fonction du nombre de personnes déterminé par le système de comptage de personnes. Par conséquent, le débit d'air neuf 8 est également régulé par le système de comptage de personnes dans l'espace de l'installation mobile. Cela permet notamment de limiter le chauffage ou refroidissement d'un wagon ferroviaire vide ; par ailleurs, une personne représentant une source de chaleur, cela permet aussi une meilleure régulation du chauffage ou du refroidissement d'un wagon ferroviaire fréquenté par des passagers. La fréquence du compresseur 10 lorsqu'il est de type inverter peut également être régulée en fonction de la fréquence du ventilateur 6. En outre ou alternativement, la fréquence du compresseur 1 du dispositif principal, lorsqu'il est de type inverter, peut aussi être régulée en fonction de la fréquence du ventilateur 6.

Par conséquent, lorsque la concentration en CO₂ de l'air dudit est faible ou lorsque le nombre de personnes présentes est faible, le débit d'air chauffé ou refroidi 7, et par conséquent également le débit d'air neuf 8 entrant, sont réduits, par exemple grâce à la diminution de la fréquence du ventilateur 6 d'insufflation d'air chauffé ou refroidi 7, et la fréquence du compresseur inverter 10 est diminuée. Ce mode de réalisation permet en particulier de réaliser des économies d'énergie en évitant de faire entrer et de traiter des quantités trop importantes d'air extérieur froid ou chaud

En outre, ou alternativement, le compresseur 1 du dispositif principal de chauffage/climatisation 50 peut également être un compresseur de type inverter.

### Mode chauffage

La figure 2a représente un mode de réalisation de l'invention dans lequel le dispositif principal de climatisation 50 n'est pas réversible. Dans ce mode de réalisation, l'air extrait 15 de l'espace à chauffer/refroidir est utilisé comme source du dispositif de récupération de la chaleur. Cet air extrait 15 a une température généralement comprise entre environ 18 et 21 °C. L'air extrait 15 qui sert de source de chaleur au dispositif thermodynamique secondaire de récupération de la chaleur 100 est amené sur l'échangeur de chaleur sur l'air extrait 12, qui est dans ce cas l'évaporateur du dispositif secondaire, l'air extrait 15 est refroidi par son passage dans l'échangeur 12, et l'air refroidi 14 est rejeté à l'extérieur grâce au ventilateur 13. L'air neuf à chauffer 8 est amené sur l'échangeur de chaleur sur l'air neuf 9 qui est dans ce cas le condenseur du dispositif secondaire, l'air neuf 8 est préchauffé par son passage dans l'échangeur de chaleur 9, l'air neuf préchauffé 20, mélangé à l'air repris 16, passe ensuite sur la résistance électrique 5, et/ou sur la batterie à eau ou à huile placé sur le circuit de refroidissement du moteur thermique, du dispositif principal pour atteindre la température requise pour le chauffage de l'espace à chauffer/refroidir. L'air chaud 7, à une température typiquement comprise entre 45°C et 55°C est insufflé par le ventilateur 6 dans l'espace à chauffer.

Dans un autre mode de réalisation représenté à la figure 2b, le dispositif de climatisation principal 50 est réversible, i.e. les échangeurs de chaleur 3 et 4 sont des échangeurs réversibles et le dispositif comporte une vanne 4 voies d'inversion de cycle (non représentée).

En mode chauffage, l'air neuf 8 est préchauffé par son passage dans l'échangeur de chaleur 9, l'air neuf préchauffé 20, mélangé à l'air repris 16, sont amenés sur l'échangeur de chaleur 4 du système principal 50 qui est dans ce cas le condenseur du dispositif principal. L'air préchauffé 20 et l'air repris 16 sont chauffés par leur passage dans l'échangeur de chaleur 4, l'air chaud 7 est insufflé dans l'espace à chauffer/refroidir par le ventilateur 6.

L'air extrait 15 qui sert de source de chaleur au dispositif thermodynamique secondaire de récupération de la chaleur 100 est amené sur l'échangeur de chaleur sur l'air extrait 12, qui est dans ce cas l'évaporateur du dispositif secondaire, l'air extrait 15 est refroidi par son passage dans l'échangeur 12, et l'air refroidi 14 est rejeté à l'extérieur grâce au ventilateur 13.

L'air extérieur (froid) 19 est utilisé comme source de chaleur par le dispositif principal 50. L'air extérieur 19 est amené sur l'échangeur de chaleur 3, qui est dans ce cas l'évaporateur du dispositif principal, où il se refroidit. L'air refroidi 17 est rejeté à l'extérieur par le ventilateur 18.

Avantageusement, le dispositif principal comporte en outre une résistance électrique 5 utilisée en tant qu'appoint ou relève du dispositif thermodynamique principal pour des températures extérieures très basses.

### Mode climatisation (refroidissement)

En référence à la figure 3, qui représente un mode de réalisation de l'invention en mode climatisation, l'air extrait 15 de l'espace à chauffer/refroidir est utilisé comme source du dispositif de récupération de la chaleur. Cet air extrait a une température généralement proche de la température ambiante de l'espace à climatiser, comprise entre environ 25°C et 27°C.

L'air extrait 15 qui sert de source est amené sur l'échangeur de chaleur sur l'air extrait 12, qui est dans ce cas le condenseur du dispositif secondaire de récupération de la chaleur 100, l'air extrait 15 est réchauffé par son passage dans l'échangeur 12, et l'air réchauffé 14 est rejeté à l'extérieur grâce au ventilateur 13. L'air neuf à rafraîchir 8 est amené sur l'échangeur de chaleur sur l'air neuf 9 qui est dans ce cas l'évaporateur du dispositif secondaire de récupération de la chaleur 100, l'air neuf 8 est pré-refroidi par son passage dans l'échangeur de chaleur 9, l'air neuf pré-refroidi 20, mélangé à l'air repris de ventilation 16, passe ensuite dans l'échangeur de chaleur 4, qui est dans ce cas l'évaporateur, du dispositif principal 50 pour atteindre la température requise pour le rafraîchissement de l'espace à chauffer/refroidir. L'air froid 7 est insufflé par le ventilateur 6 dans l'espace à rafraîchir. L'air extérieur (chaud) 19 est utilisé comme source de chaleur par le dispositif principal 50. L'air extérieur 19 est amené sur l'échangeur de chaleur 3, qui est dans ce cas le condenseur, du dispositif principal, où il se réchauffe. L'air réchauffé 17 est rejeté à l'extérieur par le ventilateur 18.

Dans un mode de réalisation particulier, le compresseur du dispositif thermodynamique secondaire de récupération de la chaleur 100 peut être arrêté si besoin. En particulier, en mode refroidissement lorsque la température de l'air neuf 8 est inférieure à celle de l'air repris 16 (la nuit ou par temps frais par exemple), il n'est plus utile de pré-refroidir l'air neuf avant de l'envoyer sur l'échangeur de chaleur 4. De la même façon, en mode chauffage, il peut être intéressant de ne plus préchauffer l'air neuf, par exemple par temps doux.

Ainsi, l'installation selon l'invention permet différents modes de régulation pour économiser de l'énergie.

### Avantages de l'invention

Les principaux avantages de l'installation de la présente invention par rapport aux installations de l'état de la technique, et en particulier les installations de l'état de la technique utilisant des dispositifs de récupération de la chaleur statiques, sont d'une part des pertes de charge plus faibles ; et d'autre part des rendements de l'ordre de 150% grâce à la présence du dispositif thermodynamique de récupération de la chaleur, en comparaison des dispositifs statiques existants dans l'état de la technique qui ont un rendement de l'ordre de 50 à 90%.

De plus, le dispositif thermodynamique de récupération de la chaleur de la présente invention utilise comme source de chaleur l'air extrait, qui, quelles que soient les conditions extérieures, est à une température comprise entre 18° et 21°C par temps froid et 25 et 27°C par temps chaud. Cela permet au dispositif thermodynamique de récupération de la chaleur d'avoir un coefficient de performance relativement constant.

Ainsi, du fait de son rendement élevé et sensiblement indépendant de la température d'air extérieur, l'installation de la présente invention permet d'utiliser un compresseur pour le dispositif principal de climatisation (et éventuellement de chauffage dans le cas d'un dispositif réversible) de taille réduite par rapport à ceux utilisés dans les installations de l'état de la technique, donnant lieu à une potentielle réduction de l'encombrement et à une possible réduction de la consommation d'énergie.

En outre, le dispositif de récupération de la chaleur de la présente invention évite les problèmes de givrage inhérents aux échangeurs de chaleur à plaques utilisés dans l'état de la technique, puisque, comme indiqué précédemment, l'air neuf est préchauffé par l'échangeur de chaleur 9 (dans ce cas condenseur) qui est à une température de l'ordre de 45 à 55°C, et la chaleur est prise par l'échangeur de chaleur 12 (dans ce cas condenseur) sur l'air extrait 15 qui est à une température de 18 à 21°C. Cela permet en particulier d'utiliser le dispositif thermodynamique de récupération de la chaleur y compris pour des températures extérieures très basses, alors que les échangeurs à plaques de l'état de la technique doivent généralement être court-circuités lorsque la température d'air extérieur devient trop basse, typiquement inférieure à -5°C.

D'autre part, le court-circuitage du récupérateur de chaleur statique des installations de l'état de la technique est remplacé par le simple arrêt du compresseur 10 du dispositif thermodynamique de récupération de la chaleur, ledit dispositif thermodynamique devenant ainsi inactif.

## Revendications

1. Installation embarquée pour le chauffage et la climatisation d'un espace d'une installation mobile, notamment l'intérieur d'un véhicule terrestre, de préférence ferroviaire, pourvue d'un dispositif principal de chauffage et de climatisation (50) comprenant un compresseur (1), un détendeur (2), un premier échangeur de chaleur sur l'air extérieur (3), un second échangeur de chaleur (4) sur l'air neuf (8), une résistance électrique (5) et/ou une batterie à eau ou à huile placée sur le circuit de refroidissement d'un moteur thermique ou électrique, un premier ventilateur (18) pour rejeter l'air extérieur après son passage dans le premier échangeur de chaleur (3), un second ventilateur (6) pour insuffler l'air chauffé ou refroidi (7) dans ledit espace à chauffer ou refroidir,
**caractérisée en ce qu'**elle comprend en outre un dispositif thermodynamique réversible de récupération de la chaleur (100) de l'air extrait (15) dudit espace, ledit dispositif de récupération de la chaleur comprenant un compresseur (10), un détendeur (11), un premier échangeur de chaleur (9) sur l'air neuf (8), un second échangeur de chaleur (12) sur l'air (15) extrait dudit espace, un ventilateur (13) pour rejeter à l'extérieur l'air (14) extrait après son passage dans l'échangeur de chaleur (12), et ledit dispositif thermodynamique réversible de récupération de la chaleur permettant grâce à la chaleur extraite de l'air (15) extrait dudit espace, de préchauffer (en mode chauffage) ou pré-refroidir (en mode refroidissement) l'air neuf (8) et d'envoyer sur le second échangeur de chaleur (4) du dispositif principal de chauffage et de climatisation (50) et la résistance (5) et/ou sur la batterie à eau ou à huile un mélange d'air repris de ventilation (16) et d'air neuf préchauffé ou pré-refroidi (20).

2. Installation embarquée pour le chauffage et la climatisation d'air selon la revendication 1, **caractérisée en ce que** l'échangeur de chaleur (3) est le condenseur et l'échangeur de chaleur (4) est l'évaporateur dudit dispositif principal (50) pour la climatisation, et le chauffage peut être effectué par la résistance électrique (5) et/ou la batterie à eau ou à huile.

3. Installation embarquée pour le chauffage et la climatisation d'air selon la revendication 1, **caractérisée en ce que** le dispositif principal de chauffage et de climatisation (50) est réversible, et la résistance électrique (5) est utilisée comme résistance d'appoint ou de relève en complément dudit dispositif principal.

4. Installation embarquée pour le chauffage et la climatisation d'air selon une quelconque des revendications 1 à 3, **caractérisée en ce qu'**elle comporte une sonde de température sur l'air neuf (8), une sonde de température sur l'air repris (16), et un moyen de commande du compresseur (10) du dispositif thermodynamique de récupération de la chaleur (100), ledit moyen de commande étant apte à arrêter le compresseur (10) lorsque l'air neuf (8) est plus froid en mode climatisation, ou plus chaud en mode chauffage que l'air repris (16).

5. Installation embarquée pour le chauffage ou la climatisation d'air selon une quelconque des revendications 1 à 4 **caractérisée en ce que** le compresseur (10) du dispositif de récupération de la chaleur (100) est de type inverter.

6. Installation embarquée pour le chauffage ou la climatisation d'air selon une quelconque des revendications 1 à 5 **caractérisée en ce que** le compresseur (1) du dispositif principal de chauffage et de climatisation (50) est de type inverter.

7. Procédé de chauffage et de climatisation d'un espace d'une installation mobile, notamment l'intérieur d'un véhicule terrestre, de préférence ferroviaire, au moyen d'une installation embarquée pour le chauffage et la climatisation d'air selon une quelconque des revendications 1 à 6, comprenant les étapes consistant à :
a) Alimenter en énergie, de préférence électrique, le compresseur (10) pour faire fonctionner !e dispositif de récupération de la chaleur, si nécessaire, alimenter en énergie, de préférence électrique, le compresseur (1) pour faire fonctionner le dispositif principal,
b) Aspirer l'air neuf (8) à chauffer ou refroidir au moyen du second ventilateur (6) du dispositif principal de chauffage et de climatisation,
c) Faire passer l'air neuf (8) sur le premier échangeur de chaleur (9) du dispositif thermodynamique réversible de récupération de la chaleur pour obtenir un air préchauffé ou prérefroidi (20), ledit échangeur de chaleur étant porté à une température appropriée par l'action du dispositif thermodynamique de récupération de la chaleur (100),
d) Mélanger l'air préchauffé (en mode chauffage) ou prérefroidi (en mode climatisation) (20) avec l'air repris (16) de l'espace,
e) Faire passer le mélange d'air obtenu à l'étape précédente sur le second échangeur de chaleur du dispositif principal de chauffage et de climatisation (50) et la résistance (5) et/ou la batterie à eau pour obtenir de l'air chauffé (en mode chauffage) ou refroidi (en mode climatisation),
f) Insuffler l'air chauffé ou refroidi (7) dans l'espace,
g) Extraire une partie de l'air de l'espace au moyen du premier ventilateur (18) du dispositif principal de chauffage et de climatisation (50),
h) Faire passer une partie de l'air extrait (15) sur le second échangeur de chaleur (12) du dispositif de récupération de la chaleur pour utiliser ledit air extrait (15) comme source du dispositif de récupération de la chaleur et obtenir de l'air (21),
i) Rejeter à l'extérieur l'air (21) au moyen du ventilateur (13) du dispositif thermodynamique réversible de récupération de la chaleur (100),
j) En mode climatisation, ou en mode chauffage dans le cas d'un dispositif principal réversible :
i. aspirer l'air extérieur (19) au moyen du premier ventilateur (18) du dispositif principal de chauffage et de climatisation (50),
ii. faire passer l'air extérieur sur le premier échangeur (3) du dispositif principal,
iii. rejeter l'air réchauffé ou refroidi (17)

8. Procédé de chauffage et de climatisation d'un espace d'une installation mobile selon la revendication 7, **caractérisé en ce que** le compresseur (10) du dispositif thermodynamique de récupération de la chaleur (100) ne fonctionne pas lorsque l'air neuf (8) est plus froid en mode climatisation, ou plus chaud en mode chauffage que l'air repris (16).

## Patentansprüche

1. Onboardanlage für die Heizung und Klimatisierung eines Raums einer mobilen Anlage, insbesondere das Innere eines Landfahrzeugs, vorzugsweise Bahnfahrzeugs, die mit einer Hauptheizungs- und Klimatisierungsvorrichtung (50) versehen ist, die einen Verdichter (1), einen Druckminderer (2), einen ersten Wärmeaustauscher auf der Außenluft (3), einen zweiten Wärmeaustauscher (4) auf der Frischluft (8), einen elektrischen Widerstand (5) und/oder einen Wasser- oder Ölkühler, der auf dem Kühlkreislauf einer Brennkraftmaschine oder eines Elektromotors platziert ist, ein erstes Gebläse (18), um Außenluft nach ihrer Passage in dem ersten Wärmeaustauscher (3) abzuleiten, ein zweites Gebläse (6), um erwärmte oder gekühlte Luft (7) in den zu heizenden oder zu kühlenden Raum einzublasen, umfasst,
**dadurch gekennzeichnet, dass** sie außerdem eine umkehrbare thermodynamische Vorrichtung zur Rückgewinnung der Wärme (100) der aus dem Raum abgeleiteten Luft (15) umfasst, wobei die Wärmerückgewinnungsvorrichtung einen Verdichter (10), einen Druckminderer (11), einen ersten Wärmeaustauscher (9) auf der Frischluft (8), einen zweiten Wärmeaustauscher (12) auf der Luft (15), die aus dem Raum abgeleitet wird, ein Gebläse (13) zum Ableiten der Luft (14), die nach ihrer Passage in dem Wärmeaustauscher (12) nach außen abgeleitet wird, umfasst, und wobei die umkehrbare thermodynamische Wärmerückgewinnungsvorrichtung es dank der Wärme, die aus der Luft (15), die aus dem Raum abgeleitet wird, extrahiert wird, erlaubt, (im Heizungsmodus) zu die Frischluft (8) vorzuwärmen oder (im Kühlmodus) abzukühlen und auf den zweiten Wärmeaustauscher (4) der Hauptheizungs- und Klimatisierungsvorrichtung (50) und den Widerstand (5) und/oder auf den Wasserkühler oder Ölkühler ein Gemisch aus Luft, die von dem Gebläse (16) übernommen wird, und vorgewärmter oder vorgekühlter Frischluft (20) zu senden.

2. Onboardanlage zur Luftheizung und -klimatisierung nach Anspruch 1, **dadurch gekennzeichnet, dass** der Wärmeaustauscher (3) der Kondensator ist, und dass der Wärmeaustauscher (4) der Verdampfer der Hauptvorrichtung (50) für die Klimatisierung ist, und dass das Heizen durch den elektrischen Widerstand (5) und/oder den Wasser- oder Ölkühler ausgeführt werden kann.

3. Onboardanlage zur Luftheizung und -klimatisierung nach Anspruch 1, **dadurch gekennzeichnet, dass** die Hauptheizungs- und Klimatisierungsvorrichtung (50) umkehrbar ist, und dass der elektrische Widerstand (5) als Zusatzwiderstand oder Übernahmewiderstand als Ergänzung der Hauptvorrichtung verwendet wird.

4. Onboardanlage zur Luftheizung und Klimatisierung nach einem der Ansprüche 1 bis 3, **dadurch gekennzeichnet, dass** sie eine Temperatursonde auf der Frischluft (8), eine Temperatursonde auf der übernommenen Luft (16) und ein Steuermittel des Verdichters (10) der thermodynamischen Wärmerückgewinnungsvorrichtung (100) umfasst, wobei das Steuermittel geeignet ist, um den Verdichter (10) zu stoppen, wenn die Frischluft (8) im Klimatisierungsmodus kälter oder im Heizmodus wärmer ist als die übernommene Luft (16).

5. Onboardanlage für die Luftheizung oder -klimatisierung nach einem der Ansprüche 1 bis 4, **dadurch gekennzeichnet, dass** der Verdichter (10) der Wärmerückgewinnungsvorrichtung (100) des Invertertyps ist.

6. Onboardanlage für die Luftheizung oder -klimatisierung nach einem der Ansprüche 1 bis 5, **dadurch gekennzeichnet, dass** der Verdichter (1) der Hauptheizungs- und Klimatisierungsvorrichtung (50) des Invertertyps ist.

7. Verfahren zur Heizung und Klimatisierung eines Raums einer mobilen Anlage, insbesondere des Inneren eines Landfahrzeugs, vorzugsweise eines Bahnfahrzeugs, mittels einer Onboardanlage zur Luftheizung und Klimatisierung nach einem der Ansprüche 1 bis 6, das die Schritte aufweist, die aus Folgendem bestehen:
a) Versorgung mit Energie, bevorzugt mit elektrischer Energie, des Verdichters (10), um die Wärmerückgewinnungsvorrichtung funktionieren zu lassen, falls erforderlich, Versorgung mit Energie, bevorzugt mit elektrischer Energie, des Verdichters (1) um die Hauptvorrichtung funktionieren zu lassen,
b) Ansaugen von Frischluft (8), die zu erwärmen oder zu kühlen ist, mittels des zweiten Gebläses (6) der Hauptheizungs- und -Klimatisierungsvorrichtung,
c) Passierenlassen von Frischluft (8) auf dem ersten Wärmeaustauscher (9) der umkehrbaren thermodynamischen Wärmerückgewinnungsvorrichtung, um eine vorgewärmte oder vorgekühlte Luft (20) zu erhalten, wobei der Wärmeaustauscher auf eine Temperatur gebracht wird, die für die Aktion der thermodynamischen Wärmerückgewinnungsvorrichtung (100) geeignet ist,
d) Mischen der vorgewärmten Luft (im Heizungsmodus) oder vorgekühlten Luft (im Klimatisierungsmodus) (20) mit der von dem Raum übernommenen Luft (16),
e) Passierenlassen des im vorhergehenden Schritt erhaltenen Luftgemischs auf dem zweiten Wärmeaustauscher der Hauptheizungs- und Klimatisierungsvorrichtung (50) und dem Widerstand (5) und/oder dem Wasserkühler, um erwärmte Luft (im Heizungsmodus) oder gekühlte Luft (im Klimatisierungsmodus) zu erhalten,
f) Einblasen von erwärmter oder gekühlter Luft (7) in den Raum,
g) Extrahieren eines Teils der Luft aus dem Raum mittels des ersten Gebläses (18) der Hauptheizungs- und Klimatisierungsvorrichtung (50),
h) Passierenlassen eines Teils der extrahierten Luft (15) auf dem zweiten Wärmeaustauscher (12) der Wärmerückgewinnungsvorrichtung, um die extrahierte Luft (15) als Quelle der Wärmerückgewinnungsvorrichtung zu verwenden und Luft (21) zu erhalten,
i) Ableiten der Luft (21) nach außen mittels des Gebläses (13) der umkehrbaren thermodynamischen Wärmerückgewinnungsvorrichtung (100),
j) im Klimatisierungsmodus oder Heizungsmodus in dem Fall einer umkehrbaren Hauptvorrichtung:
i) Ansaugen der Außenluft (19) mittels des ersten Gebläses (18) der Hauptheizungs- und - Klimatisierungsvorrichtung (50),
ii) Passierenlassen der Außenluft auf dem ersten Wärmeaustauscher (3) der Hauptvorrichtung,
iii) Ableiten der erwärmten oder gekühlten Luft (17).

8. Heizungs- und Klimatisierungsverfahren eines Raums einer beweglichen Anlage nach Anspruch 7, **dadurch gekennzeichnet, dass** der Verdichter (10) der thermodynamischen Wärmerückgewinnungsvorrichtung (100) nicht funktioniert, wenn die Frischluft (8) im Klimatisierungsmodus kälter ist oder im Heizungsmodus wärmer ist als die übernommene Luft (16).

## Claims

1. On-board installation for the heating and air-conditioning of an area of a movable installation, notably the interior of a land, preferably rail, vehicle, provided with a main heating and air conditioning device (50) comprising a compressor (1), an expansion valve (2), a first heat exchanger on external air (3), a second heat exchanger (4) on fresh air (8), an electric resistor (5) and/or a water or oil coil placed on the cooling circuit of a thermal or electric motor, a first fan (18) for discharging the external air after the passage thereof in the first heat exchanger (3), a second fan (6) for blowing the heated or cooled air (7) into said area to be heated or cooled,
**characterised in that** it further comprises a reversible thermodynamic device for heat recovery (100) from the air extracted (15) from said area, said heat recovery device comprising a compressor (10), an expansion valve (11), a first heat exchanger (9) on fresh air (8), a second heat exchanger (12) on the air (15) extracted from said area, a fan (13) for discharging the extracted air (14) outside after the passage thereof in the heat exchanger (12), and said reversible thermodynamic heat recovery device being suitable by means of the heat extracted from the air (15) extracted from said area, for preheating (in heating mode) or pre-cooling (in cooling mode) the fresh air (8) and sending to the second heat exchanger (4) of the main heating and air-conditioning device (50) and the resistor (5) and/or to the water or oil coil a mixture of returned ventilation air (16) and preheated or pre-cooled fresh air (20).

2. On-board heating and air-conditioning installation according to claim 1, **characterised in that** the heat exchanger (3) is the condenser and the heat exchanger (4) is the evaporator of said main device (50) for air-conditioning, and heating clan be performed by the electric resistor (5) and/or the water or oil coil.

3. On-board heating and air-conditioning installation according to claim 1, **characterised in that** the main heating and air-conditioning device (50) is reversible, and the electric resistor (5) is used as an extra or relief resistor in addition to said main device.

4. On-board heating and air-conditioning installation according to any one of claims 1 to 3, **characterised in that** it comprises a temperature probe on the fresh air (8), a temperature probe on the returned air (16), and means for controlling the compressor (10) of the thermodynamic heat recovery device (100), said control means being suitable for shutting down the compressor (10) when the fresh air (8) is colder in air-conditioning mode, or hotter in heating mode, than the returned air (16).

5. On-board heating or air-conditioning installation according to any one of claims 1 to 4 **characterised in that** the compressor (10) of the heat recovery device (100) is of the inverter type.

6. On-board heating or air-conditioning installation according to any one of claims 1 to 5 **characterised in that** the compressor (1) of the main heating and air-conditioning device (50) is of the inverter type.

7. Method for the heating and air-conditioning of an area of a movable installation, notably the interior of a land, preferably rail, vehicle, by means of an on-board heating and air-conditioning installation according to any one of claims 1 to 6, comprising steps consisting of:
a) Supplying with energy, preferably electrical, the compressor (10) in order to run the heat recovery device, if required, supplying with energy, preferably electrical, the compressor (1) in order to run the main device,
b) Drawing in the fresh air (8) to be heated or cooled by means of the second fan (6) of the main heating and air-conditioning device,
c) Conveying the fresh air (8) to the first heat exchanger (9) of the reversible thermodynamic heat recovery device to obtain a preheated or pre-cooled air (20), said heat exchanger being carried to a suitable temperature by the action of the thermodynamic heat recovery device (100),
d) Mixing the preheated (in heating mode) or pre-cooled (in air-conditioning mode) air (20) with the returned air (16) from the area,
e) Conveying the air mixture obtained in the preceding step to the second heat exchanger of the main heating and air-conditioning device (50) and the resistor (5) and/or the water coil to obtain heated (in heating mode) or cooled (in air-conditioning mode) air,
f) Blowing the heated or cooled air (7) into the area,
g) Extracting a portion of the air from the area by means of the first fan (18) of the main heating and air-conditioning device (50),
h) Conveying a portion of the extracted air (15) to the second heat exchanger (12) of the heat recovery device to use said extracted air (15) as the source of the heat recovery device and obtain air (21),
i) Discharging the air (21) outside by means of the fan (13) of the reversible thermodynamic heat recovery device (100),
j) In air-conditioning mode, or in heating mode in the case of a reversible main device:
i. drawing in the external air (19) by means of the first fan (18) of the main heating and air-conditioning device (50),
ii. conveying the external air to the first exchanger (3) of the main device,
iii. discharging the heated or cooled air (17).

8. Method for the heating and air-conditioning of an area of a movable installation according to claim 7, **characterised in that** the compressor (10) of the thermodynamic heat recovery device (100) does not operate when the fresh air (8) is colder in air-conditioning mode, or hotter in heating mode, than the returned air (16),
